# EUROPEAN PATENT APPLICATION

(11) **EP 2 587 437 A1**
(43) Date of publication of application: **01.05.2013**
(21) Application number: 12007250.9
(22) Date of filing: 18.10.2012
(51) Int. Cl.: G06Q 30/02

(54) **Systems and methods for mobile call measurement**

(30) Priority: 20.10.2011 US 201161549290 P
(71) Applicant: Telmetrics Inc., Mississauga ON L4W 5L6 (CA)
(72) Inventor: Lauwaert, Michael, Georgetown Ontario L7G 5W4 (CA)
(74) Representative: Thompson, Trevor George

(57) **Abstract**

Systems and methods for call measurement services. The system is operatively coupled to a first communication network and includes an advertisement module operatively coupleable to the first communication network, and configured to generate an advertisement; an address database storing a plurality of sets of call tracking addresses wherein each set corresponds to an advertiser of a plurality of advertisers. The system also includes a call tracking address selection module configured to determine a call tracking address.

## Description

### Priority

This application claims priority from U.S. provisional patent application no. 61/549,290 filed October 20, 2011. The provisional application is incorporated herein by reference.

### Field of the invention

The present invention relates generally to the field of mobile telecommunications, with common but by no means exclusive application to measuring the effectiveness of online and/or smartphone application based advertising media by tracking telephone calls made in response to a particular advertisement or advertisements.

### Background of the invention

There is a growing need for businesses to justify their advertising expenditures. Businesses must evaluate the response to marketing initiatives, in order to determine if their marketing dollars are being spent wisely. Online and smartphone-targeted advertising forms a significant portion of modern advertising campaigns.

However, counting the number of telephone calls to a company may not provide sufficient information for measuring the success of the marketing initiative. Additionally, the use of call tracking numbers temporarily assigned to an advertisement can leave an unintended legacy effect as an ad displaying such a call tracking number may continue to be accessed after the call tracking campaign for that ad has ended (in which case the call tracking number will likely not be in service or may be assigned to a different advertisement or advertiser for a new call tracking campaign).

Accordingly, the inventors have recognized a need for improved systems and methods for call measurement in response to online advertising.

### Summary of the invention

Traditional call measurement systems rely on a static Call Tracking Number (CTN) which routes calls from the originating device through the call measurement system and on to the termination number, usually the published business phone number of the advertiser. Using this methodology, rather than displaying the advertiser's business number which may have been established and distributed across any number of mediums, the advertisement displays a CTN, which is used to gage the response to an ad.

In an increasingly online world where Web spiders and crawlers are responsible for the display many of the advertisements and ultimately leads a company receives, it is undesirable for a company to have to part with its standard business number, which typically stays consistent over the course of that entity's existence, in order to track the effectiveness of an ad based on the number of calls it generates. If a Web spider were to capture a CTN from an advertisement for the company rather than the business' true number, and if that CTN is no longer active due to an ad campaign expiring or worse, is reallocated by the call tracking provider to a competing entity, the result could be lost business for the company.

Additionally, CTNs being crawled in such a way have the potential to skew the accuracy of the measurement data provided by the call tracking provider in the general case. Further, with the size of marketing and ad campaigns in use today coupled with the advent of digital media and the ease in which access is granted to such media through devices such as smart phones, the number of CTNs an entity must manage to track calls has the potential to grow exponentially and becomes impracticable. Further yet, with more companies and organizations taking advantage of call measurement services as a means to gage the effectiveness of their ad programs, CTNs become more difficult to obtain as they are finite in quantity. For these reasons as well as others, there is currently no means for a business to effectively track the effectiveness of their advertising campaigns in terms of telephone calls when generated from online properties such as traditional and mobile websites as well as those from installed applications or "apps" on a connected device.

In one aspect, the present invention is directed towards a call measurement system operatively coupled to a first communication network. The call measurement system includes an advertisement module operatively coupleable to the first communication network, the advertisement module being configured to generate an advertisement. The system also includes an address database storing a plurality of sets of call tracking addresses such that each set corresponds to one advertiser of a plurality of advertisers. The generated advertisement corresponds to an advertised advertiser of the plurality of advertisers. The call measurement system also includes a routing system is configured to receive an originating voice communication corresponding to one of the call tracking addresses and connect the originating voice communication to the advertised advertiser. A call tracking address selection module is also provided which is configured to determine a call tracking address from the set corresponding to the advertised advertiser. The call tracking address selection module is configured to determine user activity of a caller and the determined call tracking address corresponds to the determined user activity.

In some instances, the advertisement displays a master contact address corresponding to the advertised advertiser, while the advertisement does not display the determined call tracking address. The routing system may be configured to connect the originating voice communication to the master contact address.

In some implementations, the routing system may be operatively coupled to a second communication network.

The advertising module may comprise program code which when executed on a mobile communications device, causes the advertisement to be displayed on the mobile communications device.

The call measurement system may also include a call tracking database configured to store call tracking data corresponding to the originating voice communication. In some instances, for example, the call tracking data may include duration data corresponding to the duration of the originating voice communication.

The call measurement system may also include an originating communication device operatively coupled to the first communication network, wherein the originating voice communication originates from the originating communication device. The advertisement module may be configured to provide the determined call tracking address to the originating communication device.

In another aspect, the present invention is directed towards the advertisement for use with such call measurement system implementations.

In another aspect, the present invention is directed towards a method of call tracking comprising: providing an address database storing a plurality of sets of call tracking addresses, wherein each set corresponds to one advertiser of a plurality of advertisers; presenting an advertisement to a caller, wherein the presented advertisement corresponds to an advertised advertiser of the plurality of advertisers; mafrom the caller to the advertised advertiser, comprising determining user activity of the caller, determining a call tracking address from the set corresponding to the advertised advertiser, wherein the determined call tracking address corresponds to the determined user activity, and initiating a call to the determined call tracking address; and storing call tracking data corresponding to the initiated call.

In some implementations, the presented advertisement displays a master contact address to the caller, wherein the master contact address corresponds to the advertised advertiser. In some embodiments, the determined call tracking number may not be displayed on the presented advertisement.

Additionally, in some implementations at least one of the call tracking addresses comprises a telephone number. As well, each set of call tracking addresses may correspond to an advertisement accessible via a first communication network, which may, for example comprise the internet.

In some implementations, the voice communication may be initiated over a second communication network, which may, for example, comprise a cellular communication network.

The advertisement may be displayed to the caller on a mobile communication device. Such mobile communication device may be operatively coupleable to the both the first communication network and to the second communication network.

For some implementations, the method may include storing call tracking data corresponding to the initiated voice communication.

As well, determining the user activity may comprise determining, for example: a search query key word or words searched, a referring search engine accessed, browsing history, locale selected or determined, among others.

In yet a further aspect, the technology is directed towards a method of call tracking. The method may include providing an address database storing a plurality of sets of call tracking addresses, wherein each set corresponds to one advertiser of a plurality of advertisers; presenting an advertisement to a caller wherein the presented advertisement corresponds to an advertised advertiser of the plurality of advertisers; and initiating a voice communication from the caller to the advertised advertiser. Initiating the voice communication may include: determining user activity of the caller; determining an available call tracking address from the set corresponding to the advertised advertiser; assigning the determined available call tracking address to the caller; and initiating the voice communication to the determined call tracking address. The method may also include storing call tracking data corresponding to the initiated voice communication.

In some implementations, the presented advertisement displays to the caller a master contact address corresponding to the advertised advertiser. Additionally, in some instances at least one of the call tracking addresses comprises a telephone number.

For some implementations when a call tracking address is assigned to the caller, it is unavailable to be reassigned.

When a call tracking address is assigned to the caller, in some implementations it becomes available to be reassigned after the expiry of a predetermined time period.

In another aspect, the technology is directed towards a call measurement system operatively coupled to a first communication network. The system may include: an advertisement module operatively coupleable to the first communication network, wherein the advertisement module is configured to generate an advertisement; an address database storing: a plurality of sets of call tracking addresses; wherein each set corresponds to one advertiser of a plurality of advertisers. The generated advertisement may correspond to an advertised advertiser of the plurality of advertisers. As well, the routing system may be configured to receive an originating voice communication corresponding to one of the call tracking addresses and connect the originating voice communication to the advertised advertiser. The system may also include a call tracking address selection module configured to determine an available call tracking address from the set corresponding to the advertised advertiser, wherein the determined call tracking address is assigned to the caller.

In some implementations, the advertisement displays a master contact address corresponding to the advertised advertiser, and wherein the advertisement does not display the determined call tracking address. In some instances, the routing system may be configured to connect the originating voice communication to the master contact address. Additionally, the routing system may be operatively coupled to a second communication network.

### Brief description of the drawings

The present invention will now be described, by way of example only, with reference to the following drawings, in which like reference numerals refer to like parts and in which:

FIGURE 1 is a schematic diagram of a call measurement system made in accordance with the present disclosure.

FIGURE 2A is a schematic diagram illustrating among other things, example data as may be stored in the data storage of Figure 1 in a first embodiment;

FIGURE 2B is a schematic diagram illustrating among other things, example data as may be stored in the data storage of Figure 1 in an alternative embodiment;

FIGURE 3 is a diagram of an example advertisement, as may be used in conjunction with the call measurement system of Figure 1; and

FIGURE 4 is a flow diagram illustrating the steps of methods of the present disclosure.

### Detailed description of the invention

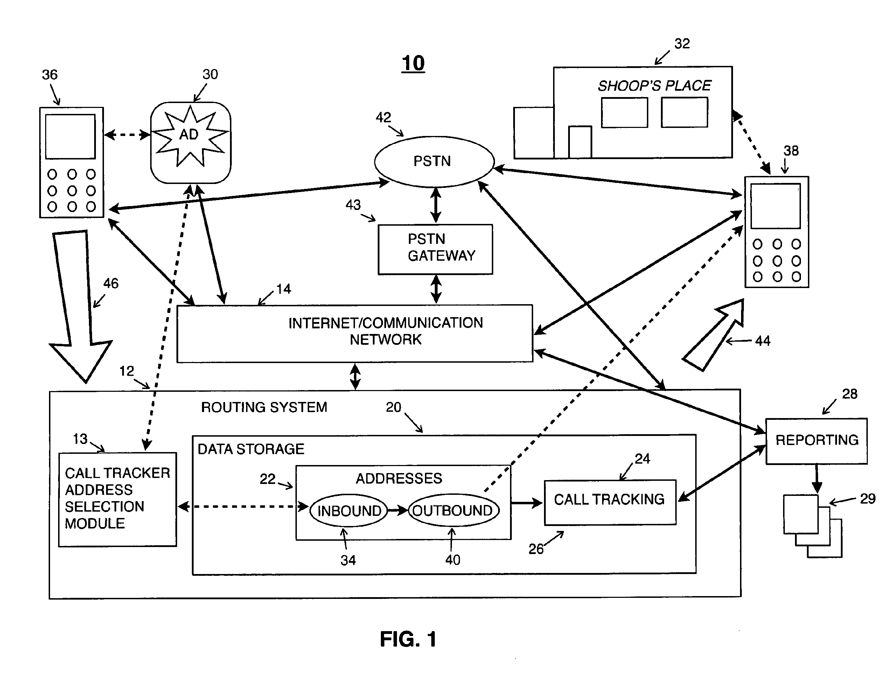

Referring to Figure 1, illustrated therein is a call measurement system (CMS), referred to generally as 10, made in accordance with the present disclosure. The CMS 10 comprises various software and hardware components, as will be understood. The CMS 10 comprises a routing system 12 which is operatively coupled to a telecommunication network (for example, such as the PSTN (Public Switched Telephone Network) 42 (sometimes referred to herein as the "second communication network"), which may in turn be coupled to the Internet 14 (sometimes referred to herein as the "first communication network") via a PSTN Gateway 43) for the receiving and placing of telephone calls or other voice communication (for example using Session Initiated Protocol (SIP) or other voice over internet protocol (VolP) or any other appropriate multimedia communication protocol).

As will be understood, the CMS 10 is provisioned or associated with a plurality of call tracking numbers or addresses - voice communications directed by a communication network such as the first or second communication networks 14, 42 to such call tracking numbers or addresses will be directed to and received by the routing system 12. Such call tracking addresses or numbers may be assigned, typically temporarily, to advertising campaigns for determining corresponding call tracking data. A CMS 10 may be provisioned with thousands (and sometimes more) call tracking addresses which may be assigned to advertising campaigns. In turn, for each advertiser there may be dozens or hundreds (or even more) call tracking addresses for its campaign(s).

A call tracker address selection module 13 is also provided which may be configured to comprise part of the routing system 12. As discussed in greater detail, below, the selection module 13 is configured to select one of the call tracking addresses for a caller to use.

Those skilled in the art can also appreciate that there are existing and emerging technologies for networked telephony communication and that the spirit and intention of the present disclosure is to include the application of existing and emerging telephony technologies.

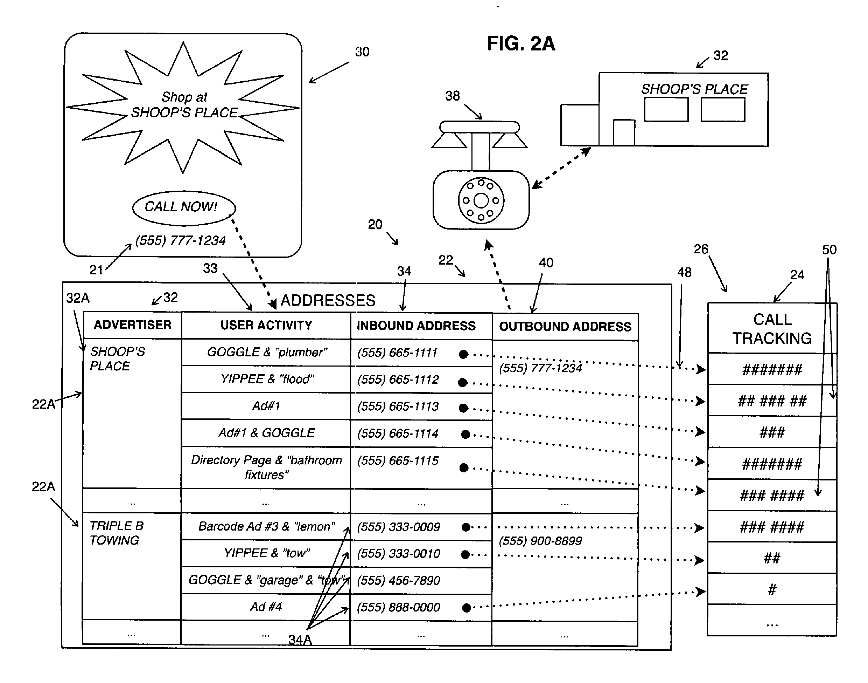

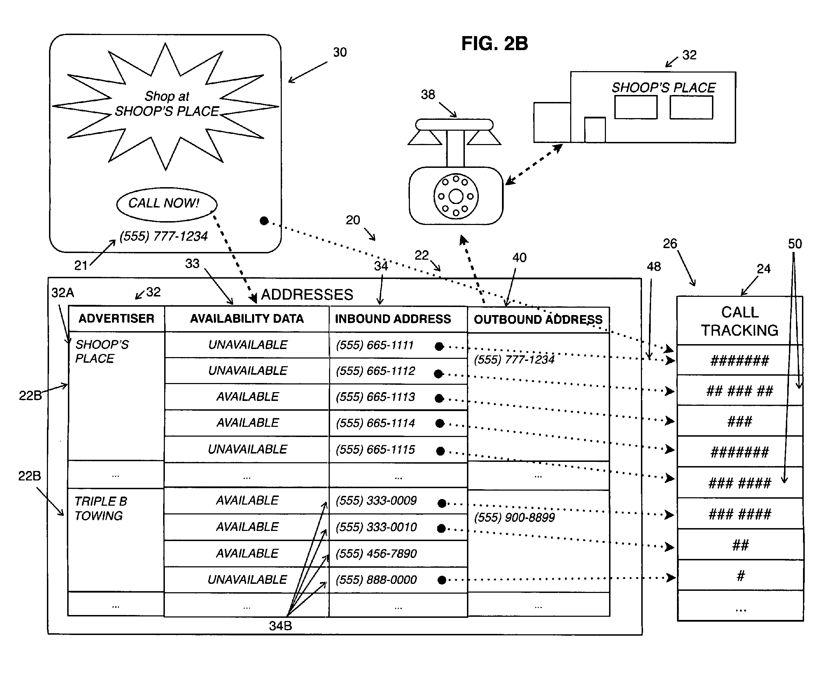

Referring again to Figure 1, data storage 20 is also provided, although as will be understood, the storage 20 and/or portions of it may comprise part of the routing system 12. As well, the storage 20 may be local to or remote from the routing system 12 server and portions of the data stored may be stored in different physical or electronic storage locations. The data storage 20 includes an address database 22 storing address data records 22A (shown in Figure 2). The data storage 20 also preferably includes a call tracking database 24 storing tracked call data 26. The various types of data may be stored in different configurations than has been illustrated herein for explanatory purposes.

The CMS 10 may also include a reporting module 28 operatively coupled to the call tracking database 24 and configured to generate reports or reporting records 29 reporting and/or summarizing the calling activity based on tracked call data 26. The reporting module 28 may be configured to be accessed by clients 32 (discussed below) via the Internet 14, and generates reports 29 on calling activity based on tracked call data 26 stored in the call tracking database 24.

The CMS 10 may be configured and programmed to permit a client to interact with the reporting module 28 via the Internet 14 for example using Transmission Control Protocol/Internet Protocol (TCP/IP). The CMS 10 may be contacted using hypertext transport protocol in a secure or unsecured method (HTTP/HTTPS) to obtain the call measurement reports 29 generated by the reporting module 28. In addition the CMS 10 may be configured to send such reports to the client 32 (discussed below) via the Internet 14 using email via the Simple Mail Transfer Protocol (SMTP) or any other means of electronic delivery. Alternate methods for delivering the report data might, for example, include S/FTP (Secure File Transfer Protocol) or transmitted to a client API (application program interface) or other callback address.

Referring briefly to Figures 1 - 3 simultaneously, the CMS 10 may also include an advertisement 30. Typically, the advertisement 30 will be accessible over a data communication network (sometimes referred to herein as the "first communication network"), such as the Internet 14. The advertisement 30 advertises or otherwise corresponds to a business or service 32 client of the CMS (sometimes referred to herein as the "advertised advertiser"). The CMS will typically have numerous different advertiser clients (not shown). As will be discussed in greater detail, below, the advertisement 30 may display a master communication address 21 corresponding to the advertiser 32. The master communication address 21 may be the standard "published" address (as contrasted with a temporarily-assigned CTN) for directing a voice communication to the advertiser 32, and may in some instances be in the form of a telephone number (as illustrated in Figure 2).

The advertisement 30 may be accessed by an originating communication device 36. In some implementations, the originating communication device 36 may access the advertisement 30 via the first communication network 14, using a web browser or similar software platform. For example, the advertisement 30 may be retrieved in an internet search and/or form part of an online directory. In other implementations, however, the advertisement 30 may be included in an application (such as a business pages directory application) stored and running on the originating communication device 36. Alternatively, the advertisement 30 may include or be embedded in a barcode or other computer readable image (for example, on a poster or product) which can be scanned into a computer, smart phone or similar electronic device. Such a barcode may cause the scanning electronic device to direct its web browser to visit a particular web page or other data source, which may then be used to trigger the voice communication process described herein.

As will be understood, the originating communication device 36 may be in the form of a computer, cell phone, smart phone, mobile phone or other electronic device operatively coupleable to the first communication network 14 and/or to the second communication network 42 (and typically coupleable to both) and suitably configured to be able to participate in data transmission and including voice communication. Without limitation, in order to participate in a voice communication the originating communication device 36 may include a microphone and one or more speakers or earphones. As will also be understood, the advertisement 30 may include programming code which when executed on the processor of the communication device 36, initiates the voice communication process described herein.

A terminating communication device 38 may also be provided, which corresponds to the business or service 32 advertised in the advertisement 30. The termination communication device 38 is configured to receive a voice communication at an outbound address 40 (which may, for example correspond to the master address 21 in the form of a phone number or a URI (uniform resource identifier) for VOIP telephony) via a communication network such as the first communication network 14 and/or the second communication network 42. The termination communication device 38 may be in the form of a computer, cell phone, smart phone, mobile phone or other electronic device operatively coupleable to the first communication network 14 and/or second communication network 42 and suitably configured to be able to participate in a voice communication. In some implementations, the termination communication device 38 may be in the form of a telephone operatively coupled to the PSTN (Public Switched Telephone Network) 42, which may in turn be coupled to the Internet 14 via a PSTN Gateway 43. The outbound address 40 may be stored in the address database 22 in an address record 22A corresponding to the advertiser 32. As will be understood, in some implementations, a plurality of outbound addresses 40 corresponding to an advertiser 32 may be stored and utilized.

In brief, as will be clarified in the following discussion, the routing system 12 is configured to receive an originating voice communication 46 addressed to the inbound address 34 and route or otherwise establish an outgoing voice communication 44 (which may be initiated (by way of example only) in the form of an SIP request or directly using the PSTN 42) to the corresponding outbound address 40.

As will be understood, reference herein to an originating voice communication 46 and to an outbound voice communication 44 should be understood to include the various requests to establish such communication links. For example, a request received by the routing system 12 to establish an originating voice communication 46 is, for the purposes herein, considered to be the "originating voice communication 46", since in some implementations no data plane (for transmitting voice communication data) will be established if the corresponding outbound request generated by the routing system 12 to establish the outgoing voice communication 44 is denied (for example, if the termination device 38 is busy). Correspondingly, the outbound request as may be generated by the routing system 12 in some implementations is, for the purposes herein, considered to be the outbound voice communication 44.

Referring briefly to Figure 2A, illustrated therein is sample address data as may be stored in the address data records 22A in some implementations (referred to herein generally as a first embodiment), and illustrating the relationship of such address data to other structures which may form part of the call management system 10. The address database 22 is configured to store at least one, and will typically store a plurality of address data records 22A, each data record 22A corresponding to an advertiser 32 (which may be indicated by a corresponding advertiser identifier 32A). Each address data record 22A may store an outbound address 40, often in the form of a URI or phone number. Each data record 22A may be configured to store a set of at least one, and typically a plurality of, inbound addresses 34 (often in the form of a phone number). Each inbound address 34 in the set 34A may be assigned to the corresponding advertiser for the duration of a call tracking campaign or campaigns.

Each outbound address 40 corresponds to a termination device 38. As such, an outbound address 40 may comprise or otherwise correspond to a URI for the termination device 38. As illustrated for example by record 22A', the outbound address 40 may correspond to a phone number for a telephone accessible through the PSTN.

As will be understood, in the first embodiment each inbound call tracking address 34 in the set 34A will uniquely correspond to specified user activity 33 data. As will be understood, by uniquely assigning a call tracking address 34 to user activity, the call tracking data 24 will reflect and provide some insight to the advertiser 32 of the steps and actions taken by a caller prior to initiating the originating voice communication process described herein. As a result, the advertiser 32 may draw conclusions from this data regarding how to better and more effectively target potential customers with advertisements.

By way of example, the user activity 33 data may correspond to a search engine used to retrieve the advertisement 30, one or more keywords used in a search query (eg. "plumber" or "flood" which may be identified in connection with an advertiser 32 providing plumbing services), the location or source of the advertisement retrieved, and the caller's interactions with the advertisement (if the advertisement 30 was interactive, for example). In some implementations, if several different advertisements are being used in a particular call tracking/advertising campaign, the specific advertisement 30 retrieved by the caller may also be reflected in the user activity 33 data. The user activity 33 data may also reflect whether the advertisement was retrieved through online browsing or from a directory page from a smartphone application, for example. Different combinations of such user activity 33 data may uniquely correspond to a particular call tracking address 34. For example, data corresponding to a search engine "GOGGLE" may be uniquely combined with search query term "plumber". Alternatively, data corresponding to a particular advertisement (eg. identified as "Ad #1" in the exemplary data represented in Figure 2A) may, by itself, uniquely correspond to an inbound address 34 or it may be combined with other data (eg. indicating the use of a search engine, "GOGGLE", to retrieve the advertisement). As will be understood, depending on the detail and granularity of the user activity data desired to be obtained (as well as the number of call tracking addresses 34 available to be assigned to a campaign for an advertiser 32), numerous combinations of data may be created and uniquely assigned to a corresponding call tracking address 34

Each outbound address 40 typically corresponds to a set 34A of inbound addresses 34. In some implementations, however, a set 34A of inbound addresses 34 may correspond to multiple outbound addresses 40 (each of which corresponds to the same client 32). For example, such a configuration may be advantageous if the client 32 has multiple retail locations or stores or call centres and it is desirable to route the originating voice communication 46 to an outbound address 40 corresponding to a physical location proximate that of the originating communication device 36. Similarly, such a configuration might be desirable if a call answering service having multiple call centres is to be used to receive the originating voice communications 46. As will be understood, if the originating communication device 36 is located in France, it might be desirable to route the originating voice communication 46 to an outbound address 40 corresponding to a physical location in France and/or to a call centre location able to communicate in French. For such a configuration, appropriate location and/or language capability data for each outbound address 40 would typically be stored in the address database 22. Furthermore, in some instances the routing system 12 could be configured to determine a physical location of the originating communication device 36 based on data retrieved from the device 36.

Each address record 22A may also store call tracking data 26 for the originating 46 and/or termination 44 voice communications corresponding to the inbound address 34. Alternatively, the call tracking database 24 may be separate from the address database 22 and each address record 22A may store one or more call tracking links 48 to a corresponding call tracking record 50 in the call tracking database 24 which stores the tracked call data 26. By way of example only, the tracked call data 26 may include for each corresponding inbound address 34 the volume of calls, call disposition (eg. answered, unanswered, blocked, or a busy signal was returned, etc.), the time each call was initiated, call duration of the calls, how many rings occurred before the call was answered, or other data that may be used to measure performance or other aspects of the telephone calls. If available, the call tracking data 26 may also include the URI corresponding to the originating communication device 36. Other types of call tracking data may be tracked and stored for particular applications, as will be understood.

As will be understood, in some implementations in which the advertisement 30 may be included in an application (such as a business pages directory application) stored and running on the originating communication device 36, the advertisement 30 may also be provisioned with a portion of the address database 22 (storing the call tracking addresses 34 and corresponding user activity 33 data for the advertiser 32). Alternatively, such as in the case of a Web browser based application, a portion of the address database 22 may be cached or otherwise stored locally, for example through the use of HTML5 based local storage, on the originating communication device 36 for later offline processing. Additionally, the advertisement 30 software code could also be provisioned with a client version of the call tracker address selection module 13 so that a call tracking address 34 may be determined locally (on the communication device 36) without needing to first connect with the routing system 20.

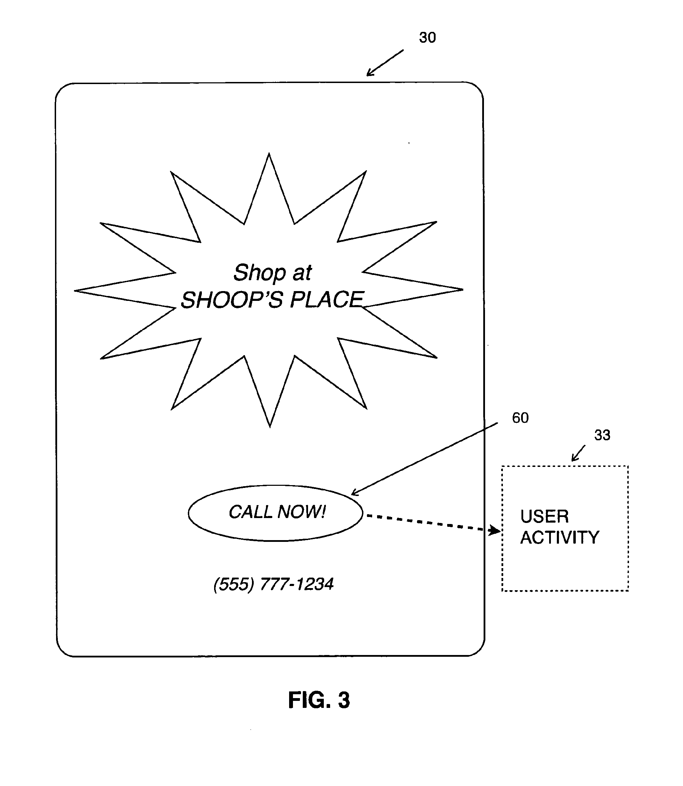

Turning briefly to Figure 3, illustrated therein is an example advertisement 30 for a business (or service) which may be accessed and presented and displayed on a display screen of the communication device 36. The advertisement 30 displays or otherwise indicates an opportunity to initiate a voice communication (referred to generally herein as a "telephone call" without intending to be limited to POTS (Plain Old Telephone Service)). In the illustrated example, the advertisement 30 may include a "Call Now!" button 60 or other interactive functionality allowing a user viewing or otherwise accessing the advertisement 30 to initiate a telephone call to the advertised business 32. For example, instead of a "Call Now!" button, an advertisement 30 may include text (such as a phone number corresponding to the business' actual phone number (as contrasted with a call tracking number)) which is configured to act as a hypertext link to initiate the telephone call process discussed below.

As will be understood, the advertisement 30 is made up of one or more data/software files (sometimes referred to herein as the "advertisement module") and includes the appropriate software code to cause the browser or other client application of the originating communication device 36 to initiate a request to the routing system 12 for the call tracking address selection module 13 to determine a call tracking address 34 from the set 34A of call tracking addresses 34 corresponding to the advertised advertiser 32. Such advertisement 30 software code is also configured to determine and communicate data corresponding to the caller's user activity, which the call tracking address selection module 13 utilizes to compare to the combinations of user activity 33 data in order to select the best combination match and consequently determine the corresponding inbound address 34. In some implementations, data corresponding to the caller's user activity may be retrieved from the header information retrieved from the browser of the originating communication device 36.

Once the call tracking address 34 to be used in establishing the originating voice communication has been determined, such call tracking address 34 is communicated to the advertisement 30 software code, typically via the first communication network 14. The advertisement 30 software code is further configured to cause the communication device 36 to establish an originating voice communication to the determined call tracking address 34. In some implementations in which the communication device 36 comprises cellular telephony capability, the advertisement 30 software code may cause the communication device 36 to initiate a telephone call to the determined call tracking address 34 using the device's 36 native dialer. In addition, or alternatively, the originating voice communication 46 might also be initiated using VOIP over the Internet 14.

The software code and inbound address 34 data will typically be transparent or invisible (and not displayed) to the viewer of the advertisement 30. In the event the advertisement 30 is accessed at a later point in time (for example, after the call tracking campaign has ended), the call tracking number 34 will not be displayed to the viewer.

The "invisibility" of the inbound address 34 data reduces the possibility of a person utilizing an "expired" call tracking number 34 after a call tracking campaign has ended.

The advertisement 30 may or may not display a telephone number for the advertised business 32. However, if the advertisement 30 displays the master contact address or phone number of the advertiser 32, if the advertisement is viewed after a call tracking campaign has expired (in which case the call tracking numbers 34 in the set 34A may no longer be operative for the advertiser 32), accurate contact information for the advertiser 32 will still be presented to viewers.

Furthermore, while the advertisement 30 has been illustrated as a simple, static ad, it should be understood that without limitation the advertisement 30 may include a multimedia display of some form. As well, for the purposes herein, the advertisement 30 is not required to be a "stand alone" advertisement, but may include a portion of a webpage (or email) or other type of document or information display configured to direct viewers to contact a referenced business or service. In some implementations, the advertisement 30 may be implemented as an online application (for example, an applet) or a physical display of the advertisement in another media in whole or in part.

Turning now to Figure 2B, illustrated therein is sample address data as may be stored in the address data records 22B, as may be utilized in a second or alternative embodiment. The address database 22 is configured to store at least one, and will typically store a plurality of address data records 22B, each data record 22B corresponding to an advertiser 32 (which may be indicated by a corresponding advertiser identifier 32A). Each address data record 22B may store an outbound address 40, often in the form of a URI or phone number. Each data record 22A may be configured to store a set of at least one, and typically a plurality of, inbound addresses 34 (often in the form of a phone number).

Call tracking addresses 34 may be arranged in sets 34B and assigned to a corresponding advertiser 32. The set 34B establishes a pool of call tracking addresses 34 which may be dynamically assigned to callers. Availability data 35 corresponding to whether a call tracking address 34 is currently assigned or available to be assigned may be stored in the relevant address data record 22B. Typically, such assignment will be set to expire either upon receipt of one (or a pre-determined number of) originating voice communication 46 directed to the assigned call tracking address 34 or upon a time limit. For example, a call tracking address 34 may be assigned to a specific caller for a period of e.g. 2 hours, after which time period, the call tracking address 34 is returned to the available pool of addresses 34 in the set 34A for the advertiser.

With this alternative embodiment, upon the advertisement 30 software code having determined and communicated data corresponding to the caller's user activity to the call tracking address selection module 13, the call tracker address selection module 13 is configured to determine an available call tracking address 34 from the set 34A corresponding to the advertised advertiser. The determined call tracking address 34 is communicated to the originating communication device 36. The determined call tracking address 34 may be stored on the communication device 36, for example, in "cookie" data associated with the browser or, in the case of a smartphone application, in memory or other available means of local storage. Additionally, the corresponding availability data 35 is updated to reflect that the call tracking address 34 has been assigned. Correspondingly, when the call tracking address is assigned, call tracking data 26 corresponding to the user activity received from the advertisement 30 software is stored, together with data corresponding to the assigned call tracking address 34. If a call is subsequently placed to the assigned call tracking address 34, call tracking data 26 corresponding to such call may be associated with the corresponding user activity data previously stored, for analytical purposes.

As will be understood, such an alternative embodiment may be desirable in the case where the level of granularity makes the use of an uniquely assigned call tracking address 34 for each possible combination of user activity impractical or simply undesirable for the advertiser 32.

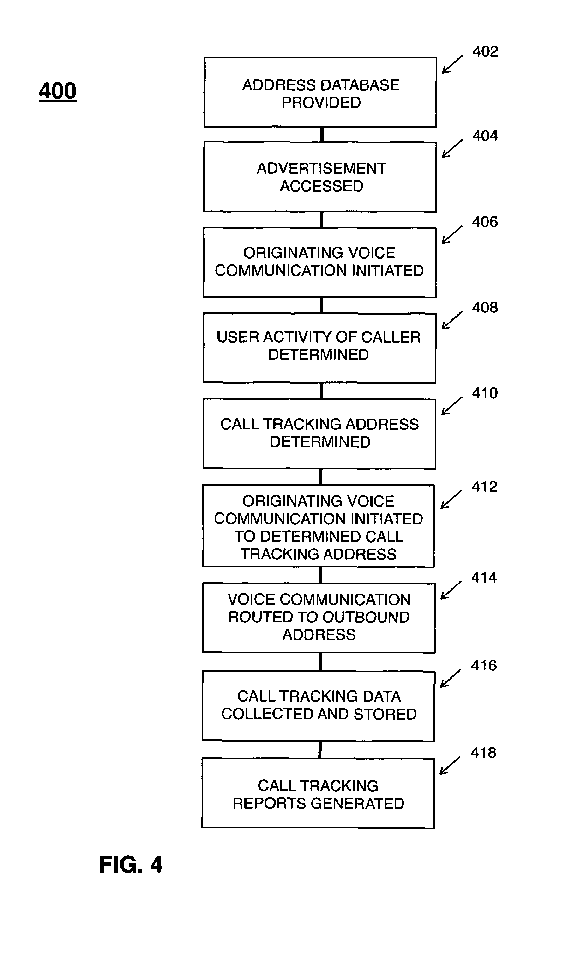

Referring now to Figure 4, this figure is a flow chart setting out a method 400 of call tracking in accordance with the present disclosure. An address database 22 may be provided which stores a plurality of sets 34A (and/or 34B) of call tracking addresses 34 (Block 402). Each set of call tracking addresses 34A, 34B corresponds to one advertiser 32, and there may be a plurality of such advertisers 32.

A user (sometimes referred to herein as a "caller") may access or be presented with an advertisement 30 corresponding to one of the advertisers 32 (Block 404). The user or caller does so using an originating communication device 36. As noted above, typically the advertisement 30 is accessed via the first communication network 14. An originating voice communication 46 (or request) may then be initiated from the caller via the communication device 36 to the advertised advertiser 32 (Block 406). As noted above, this step may for example, be triggered by the user selecting a "Call Now!" button 60 or otherwise indicating a desire to initiate a telephone call to the advertised business 32, thereby launching corresponding code contained in the advertisement 30 for the web browser or other application (such as a smartphone application) operating on the originating communication device 36 to initiate the process for establishing the originating voice communication link 46.

The process for establishing the originating voice communication link 46 may be initiated by determining user activity of the caller (Block 408). As noted above, this may involve the advertisement 30 software code polling or querying the browser or application residing on the originating communication device 36 to obtain data corresponding to the caller's user activity. Such user activity data may then be communicated to the call address selection module 13.

The call tracking address may then be determined by the call tracker address selection module 13 from the set 34A of call tracking addresses 34 (Block 410). As discussed in greater detail in connection with the first embodiment (described in relation to Figure 2A), above, this process may involve comparison of pre-determined user activity categories 33 to the user activity determined in relation to Block 408. In addition or allternatively, as discussed in connection with the second embodiment (discussed in relation to Figure 2B), an available call tracking address 34 may be selected by the call tracker address selection module 13. The determined call tracking address 34 may be communicated to the originating communication device 36, and an originating voice communication may be initiated by the originating communication device 34 to the determined call tracking address 34. (Block 412)

The originating voice communication 46 may then be received by the routing system 12 and routed to the outbound address 40 corresponding to the advertised advertiser 32 (Block 414). The routing system 12 may accomplish this by initiating an outgoing voice communication 44 using the corresponding outbound address 40. In some instances, the routing system 12 may initiate a request, such as an SIP request, to the termination device 38 at the outbound address 40 in order to establish the outbound voice communication link 44. The routing system 12 may then "connect" the originating voice communication 46 and the outgoing voice communication 44. By staying "on the call", the routing system 12 may then track and store call tracking data corresponding to the call (Block 416). Ultimately, call tracking reports 29 corresponding to the call tracking data 26 stored in the call tracking database 28 may be generated (Block 418).

While the method has been shown and described above with the determination of the call tracking address 34 (discussed generally in relation to Blocks 408-410) occurring after the triggering of the originating voice communication (in Block 406), it should be understood that in some variations, the process of determining the call tracking address 34 may be triggered upon the accessing or generation of the advertisement (described generally in relation to Block 404), in anticipation of an originating voice communication 46 being initiated subsequently.

Thus, while what is shown and described herein constitute preferred embodiments of the subject invention, it should be understood that various changes can be made without departing from the subject invention, the scope of which is defined in the appended claims.

## Claims

1. A method of call tracking comprising:
(a) providing an address database (22) storing:
(i) a plurality of sets (34A) of call tracking addresses (34);
(ii) wherein each set corresponds to one advertiser (32) of a plurality of advertisers (32);
(b) presenting an advertisement (30) to a caller;
(c) wherein the presented advertisement (30) corresponds to an advertised advertiser of the plurality of advertisers;
(d) initiating a voice communication (46) from the caller to the advertised advertiser (32), comprising:
(i) determining user activity of the caller;
(ii) determining a call tracking address (34) from the set (34A) corresponding to the advertised advertiser (32), wherein the determined call tracking address (34) corresponds to the determined user activity; and
(iii) initiating the voice communication to the determined call tracking address (34);
(e) storing call tracking data (26) corresponding to the initiated voice communication.

2. The method of claim 1, wherein determining the user activity comprises determining at least one selected from the group consisting of: a search query key word searched, a search engine accessed, browsing history locality, and established user session.

3. A call measurement system (10) operatively coupled to a first communication network (14), the system comprising:
(a) an advertisement module operatively coupleable to the first communication network (14), wherein the advertisement module is configured to generate an advertisement (30);
(b) an address database (22) storing:
(i) a plurality of sets of call tracking addresses (34);
(ii) wherein each set corresponds to one advertiser of a plurality of advertisers (32);
(c) wherein the generated advertisement (30) corresponds to an advertised advertiser of the plurality of advertisers (32);
(d) wherein the routing system (12) is configured to receive an originating voice communication (46) corresponding to one of the call tracking addresses (34) and connect the originating voice communication (46) to the advertised advertiser (32);
(e) a call tracking address selection module (13) configured to determine a call tracking address (34) from the set corresponding to the advertised advertiser (32);
(f) wherein the call tracking address selection module (13) is configured to determine user activity (33) of a caller;
(g) wherein the determined call tracking address (34) corresponds to the determined user activity (33).

4. A method of call tracking comprising:
(a) providing an address database (22) storing:
(i) a plurality of sets (34B) of call tracking addresses (34);
(ii) wherein each set corresponds to one advertiser of a plurality of advertisers (32);
(b) presenting an advertisement (30) to a caller;
(c) wherein the presented advertisement (30) corresponds to an advertised advertiser of the plurality of advertisers (32);
(d) initiating a voice communication (46) from the caller to the advertised advertiser (32), comprising:
(i) determining user activity of the caller;
(ii) determining an available call tracking address (34) from the set corresponding to the advertised advertiser (32);
(iii) assigning the determined available call tracking address (34) to the caller; and
(iv) initiating the voice communication to the determined call tracking address (34);
(e) storing call tracking data (26) corresponding to the initiated voice communication.

5. The method of claim 4, wherein when a call tracking address (34) is assigned to the caller, it is unavailable to be reassigned.

6. The method of any of claims 4 and 5, wherein when a call tracking address (34) is assigned to the caller, it becomes available to be reassigned after the expiry of a predetermined time period.

7. The method of any of claims 1, 2 and 4 to 6, wherein the presented advertisement (30) displays a master contact address (21) to the caller, wherein the master contact address corresponds to the advertised advertiser (32), and wherein the determined call tracking number (34) is not displayed on the presented advertisement (30).

8. The method of any of claims 1, 2 and 4 to 7, wherein the voice communication (46) is initiated over a second communication network (42) and wherein the second communication network (42) comprises a cellular communication network.

9. A call measurement system operatively coupled to a first communication network (14), the system comprising:
(a) an advertisement module operatively coupleable to the first communication network (14), wherein the advertisement module is configured to generate an advertisement (30);
(b) an address database (22) storing:
(i) a plurality of sets (34B) of call tracking addresses (34);
(ii) wherein each set corresponds to one advertiser of a plurality of advertisers (32);
(c) wherein the generated advertisement (30) corresponds to an advertised advertiser of the plurality of advertisers (32);
(d) wherein the routing system (12) is configured to receive an originating voice communication (46) corresponding to one of the call tracking addresses (34) and connect the originating voice communication (46) to the advertised advertiser (32);
(e) a call tracking address (34) selection module configured to determine an available call tracking address (34) from the set corresponding to the advertised advertiser (32);
(f) wherein the determined call tracking address (34) is assigned to the caller.

10. The system (10) as claimed in any of claims 3 and 9, wherein the advertisement (30) displays a master contact address corresponding to the advertised advertiser (32), and wherein the advertisement (30) does not display the determined call tracking address (34).

11. The system as claimed in any of claims 3, 9 and 10, wherein the routing system (12) is configured to connect the originating voice communication (46) to the master contact address.

12. The system (10) of any of claims 3 and 9 to 11 wherein the advertisement module is configured to provide the determined call tracking address (34) to the originating communication device (36).

13. The system (10) of any of claims 3 and 9 to 12, wherein the advertising module comprises program code which when executed on a mobile communication device (36), causes the advertisement (30) to be displayed on the mobile communication device (36).

14. The call measurement system (10) of any of claims 3 and 9 to 13, further comprising a call tracking database (28) configured to store call tracking data (26) corresponding to the originating voice communication (46).

15. The advertisement (30) for use with the call measurement system of any of claims 3 and 9 to 14.
